# EUROPÄISCHE PATENTSCHRIFT

(11) **EP 3 374 135 B1**
(45) Veröffentlichungstag und Bekanntmachung des Hinweises auf die Patenterteilung: **16.02.2022**
(21) Anmeldenummer: 16794518.7
(22) Anmeldetag: 09.11.2016
(51) Int. Cl.: B25J 9/16

(54) **VERFAHREN ZUM VEREINFACHTEN ÄNDERN VON APPLIKATIONSPROGRAMMEN ZUR STEUERUNG EINER INDUSTRIEANLAGE**
METHOD FOR THE SIMPLIFIED MODIFICATION OF APPLICATION PROGRAMS FOR CONTROLLING AN INDUSTRIAL PLANT
PROCÉDÉ DE MODIFICATION SIMPLIFIÉE DE PROGRAMMES D'APPLICATION POUR LA COMMANDE D'UNE INSTALLATION INDUSTRIELLE

(30) Priorität: 11.11.2015 DE 102015222167
(43) Veröffentlichungstag der Anmeldung: 19.09.2018
(73) Patentinhaber: KUKA Deutschland GmbH, 86165 Augsburg (DE)
(72) Erfinder: SEDLMAYR, Andreas, 82256 Fürstenfeldbruck (DE)
(74) Vertreter: Oelke, Jochen
(86) Internationale Anmeldenummer: PCT/EP2016/001856
(87) Internationale Veröffentlichungsnummer: WO 2017/080647

(56) Entgegenhaltungen:
- EP-A1- 1 510 894
- EP-A1- 1 533 671
- EP-A1- 1 724 676
- DE-A1- 10 038 439
- US-A- 6 167 328

## Beschreibung

### Gebiet der Erfindung

Die Erfindung betrifft ein Verfahren zum vereinfachten Ändern von Applikationsprogrammen einer Industrieanlage, wobei insbesondere das Auffinden von Programmstellen im Applikationsprogramm, welche geändert werden sollen, vereinfacht wird. Weiterhin betrifft die vorliegende Erfindung ein Computerprogramm, welches es ermöglicht, das Verfahren mittels eines Computers oder eines Mikrokontrollers auszuführen und eine Vorrichtung, welche einen Computer und/oder einen Mikrokontroller umfasst, der dazu eingerichtet, ist das Computerprogramm gemäß dem Verfahren auszuführen.

### Hintergrund

Applikationsprogramme zur Steuerung von Industrieanlagen bestehen typischerweise aus einer Aneinanderreihung unterschiedlicher Ausführungsschritte, welche Ausführungsschritte durch Parameter variiert werden können. Ein Ausführungsschritt ist dabei als Sub-Einheit einer Operation einer Industrieanlage zu verstehen. Beispielsweise kann ein solcher Ausführungsschritt das Ein-/oder Ausschalten eines Teils der Industrieanlage, wie beispielsweise eines Schweißbrenners sein. Ebenso kann ein Ausführungsschritt die Bewegung eines bewegbaren Teils der Industrieanlage definieren. Bewegbare Teile können beispielsweise Linearachsen, Manipulatoren oder im allgemeinen Aktuatoren sein.

Ausführungsschritte werden durch Parameter wie etwa (Bewegungs-)Koordinaten, Zeitangaben, Vorgaben für Kräfte und/oder Momente, Temperaturgrenzen und dergleichen variiert. Insbesondere beim Einrichten einer solchen Industrieanlage ist es notwendig, die Parameter und gegebenenfalls auch die Aneinanderreihung der einzelnen Ausführungsschritte zu verändern.

Um eine flexible Anpassung/Optimierung eines Applikationsprogramms zu ermöglichen, wird das Applikationsprogramm typischerweise so erstellt, dass nicht nur der ursprüngliche Programmierer das Applikationsprogramm ändern kann, sondern auch weitere geschulte Personen zu Änderungen berechtigt sind.

Typischerweise wird ein Applikationsprogramm in mehreren Abschnitten mit Hilfe einer entsprechenden Entwicklungsumgebung erstellt. Nachdem das Programm zumindest teilweise lauffähig ist - d. h. das Applikationsprogramm ist noch nicht vollständig und/oder läuft noch nicht fehlerfrei -, werden in der sich anschließenden Programmierphase die Parameter der Ausführungsschritte optimiert und gegebenenfalls Fehler erkannt und behoben. Typischerweise wird dabei das reale Verhalten der Industrieanlage, d. h. der aktuelle Systemzustand der Industrieanlage mit dem gewünschten Sollzustand verglichen. Sollen Änderungen vorgenommen werden, wie beispielsweise eine Änderung der Parameter eines Ausführungsschrittes, so ist es notwendig, dass die Person, welche die Änderungen vornimmt erkennt, welcher Ausführungsschritt des Applikationsprogramms dem aktuellen Systemzustand der Industrieanlage entspricht.

Bleibt die Industrieanlage, beispielsweise nach einem Ausführungsschritt, aufgrund eines aufgetretenen Fehlers stehen, muss der Programmierer erkennen, an welcher Programmstelle des Applikationsprogramms die Industrieanlage aktuell steht und einen Bezug zu der entsprechenden Programmcodestelle und/oder dem entsprechenden Parametersatz herstellen, um dort die nötigen Änderungen vorzunehmen. Insbesondere bei Java-Programmen ist dies manchmal ein Problem. Sobald eine "Exception" als Ursache für einen Fehler ausgelöst wird, die dann zum Programmabbruch führt, steht dem Programmierer meist nur ein sog. "Callstack" zu Verfügung, nicht zwingend jedoch die fehlerursächliche Programmstelle.

Als Programmstelle werden dabei Codestellen im Applikationsprogramm bezeichnet. Insbesondere kann eine Programmstelle ein Anfangs- und/oder Endpunkt eines Ausführungsschrittes kennzeichnen. Um zu erkennen, an welcher Programmstelle die Industrieanlage augenblicklich steht, ist ein erheblicher Schulungsaufwand notwendig. Zudem ist das beschriebene Vorgehen fehleranfällig, da nicht sichergestellt werden kann, dass die entsprechende Programmstelle korrekt erkannt wird.

Um das beschriebene Problem zu lösen, werden derzeit Techniken angewandt, die die Lesbarkeit und das intuitive Verständnis des Programmcodes verbessern sollen. Diese Techniken umfassen beispielsweise die grafische Modellierung der Applikationsprogramme durch Semantikmodelle und dergleichen. Dennoch besteht auch hier das Problem der richtigen und schnellen Zuordnung eines vergangenen und/oder des aktuellen Systemzustands der Industrieanlage zu der entsprechenden Programmstelle des Applikationsprogramms, bzw. des grafischen Modells. Grundsätzlich besteht das beschriebene Problem in allen Industrieanlagen und insbesondere bei deren initialer Inbetriebnahme und/oder bei der Änderung von Prozessabläufen. Typische Industrieanlagen umfassen zumindest einen Manipulator, welcher dazu eingerichtet ist, physikalisch mit der Umgebung zu interagieren. Beispielsweise kann ein derartiger Manipulator ein Industrieroboter sein, der über zumindest drei bewegliche, frei programmierbare Achsen verfügt und einen Endeffektor, wie beispielsweise einen Greifer, führt. Derartige Industrieanlagen kommen beispielsweise in der Automobilfertigung zum Einsatz. Wird eine solche Industrieanlage auf die Produktion eines neuen Fahrzeugtyps umgestellt, so sind umfangreiche Änderungen nötig, welche im Stand der Technik oft mit hohem Zeitaufwand und mit hoher Fehlerwahrscheinlichkeit durchgeführt werden.

Die EP1 724 676 A1 offenbart ein Verfahren und eine Vorrichtung zur Entwicklung von Softwareprogrammen unter Einbindung von Metadaten. Die Metadaten sind dabei dazu gedacht während der Erstellung eines Ablaufprogrammes ausgewählte Softwaresegmente zu identifizieren und diesen einen Status zuzuordnen.

Die DE 10038439 A1 offenbart ein Verfahren zum Debuggen von Programmen, die in Form eines Flow-Charts auf einer graphischen Programmieroberfläche visualisiert werden können. Den Programmbefehle werden in dieser Darstellung Symbole (Icons) zur Klassifizierung des Befehlseingabetyps zugewiesen, z.B. "Stoppe Achse", "Stoppe Task" oder "Setze Bewegung fort".

Aufgabe der vorliegenden Erfindung ist es, die beschriebenen Nachteile vollständig oder teilweise auszuräumen.

### Ausführliche Beschreibung der Erfindung

Die Aufgabe wird durch ein Verfahren nach Anspruch 1, ein Computerprogramm nach Anspruch 11 und eine Computervorrichtung nach Anspruch 12 gelöst. Insbesondere wird die Aufgabe durch ein computerimplementiertes Verfahren zum vereinfachten Ändern von Applikationsprogrammen einer Industrieanlage umfassend die folgenden Verfahrensschritte gelöst:
a) Bereitstellen zumindest eines Applikationsprogramms auf einer Industrieanlage, wobei das zumindest eine Applikationsprogramm mehrere Programmstellen aufweist;
b) Bereitstellen zumindest einer grafischen Darstellung, wobei die zumindest eine grafische Darstellung ein Foto der Industrieanlage ist, wobei die zumindest eine grafische Darstellung zumindest einen Systemzustand der Industrieanlage zeigt, wobei der Systemzustand einer der mehreren Programmstellen entspricht und jede der grafischen Darstellungen mit zumindest einer der mehreren Programmstellen des zumindest einen Applikationsprogramms verknüpft ist;
c) Ausführen des zumindest einen Applikationsprogramms und, falls das zumindest eine Applikationsprogramm stoppt, Ausführen der folgenden Verfahrensschritte:
   d1) Anzeigen der zumindest einen grafischen Darstellung zum Vergleichen des aktuellen Systemzustands der Industrieanlage mit der zumindest einen grafischen Darstellung
   d2) Empfangen einer Benutzereingabe zur Auswahl einer grafischen Darstellung oder einer Verknüpfung zwischen einer grafischen Darstellung und einer der mehreren Programmstellen (P1 bis P5), und
e) Auffinden einer der mehreren Programmstellen, mit der die ausgewählte grafische Darstellung verknüpft ist, unter Verwendung der Verknüpfung zwischen der zumindest einen grafischen Darstellung und der einen der mehreren Programmstellen
   wobei das Auffinden der Programmstelle eine Änderung des zumindest einen Applikationsprogramms ermöglicht, indem einem Bediener ein Editor angezeigt wird,
   wobei der Editor vorzugsweise ein grafisches Modell des zumindest einen Applikationsprogramms umfasst und
   wobei mittels des Editors Änderungen in dem zumindest einen Applikationsprogramm vorgenommen werden können
   wobei die Verknüpfung der zumindest einen grafischen Darstellung mit der entsprechenden einen der mehreren Programmstellen automatisch,
   entsprechend der Änderungen des Applikationsprogramms (2, 3) aktualisiert wird; und
f) Ausführen des zumindest einen geänderten Applikationsprogramms zur Steuerung der Industrieanlage.

Wie eingangs beschrieben, entspricht eine Programmstelle vorzugsweise einem Anfangs- und/oder Endpunkt eines Ausführungsschrittes eines Applikationsprogramms. Ein Ausführungsschritt ist dabei eine Sub-Einheit einer Operation einer Industrieanlage. Beispielsweise kann ein solcher Ausführungsschritt das Bewegen eines Tool-Center-Points (TCP) eines Manipulators der Industrieanlage von einem ersten Punkt A zu einem zweiten Punkt B sein.

Typischerweise ist ein Applikationsprogramm ein High-Level-Programm, das unterschiedliche Ausführungsschritte der Industrieanlage über Programmstellen miteinander verknüpft und vorzugsweise in Form eines Modells, wie etwa eines grafischen Modells übersichtlich dargestellt wird. Die zumindest eine Programmstelle des Applikationsprogramms ist mit zumindest einer grafischen Darstellung der Industrieanlage verknüpft. Die grafische Darstellung der Industrieanlage kann sowohl ein tatsächliches Bild, wie etwa ein Foto oder ein Video der Industrieanlage, als auch eine abstrahierte Darstellung umfassen. Ebenso kann die grafische Darstellung nur einen Teil der Industrieanlage zeigen, der für die entsprechende Programmstelle charakteristisch ist. Betrifft die Programmstelle beispielsweise das Greifen eines Objekts, kann nur der Greifer dargestellt sein.

Die Verknüpfung der zumindest einen grafischen Darstellung mit der entsprechenden Programmstelle ermöglicht es, beispielsweise durch Anwählen der grafischen Darstellung der Verknüpfung zu folgen und so direkt zu einem Editor zu gelangen, der das Ändern des Applikationsprogramms an der entsprechenden Programmstelle ermöglicht. Das Anwählen kann beispielsweise durch einen Mausklick, einen Touch-Befehl, eine Sprachsteuerung, eine Gestensteuerung und/oder dergleichen erfolgen.

Nach dem Anzeigen wird der zumindest einen grafischen Darstellung ein vergangener und/oder der aktuelle Systemzustand der Industrieanlage mit der zumindest einen grafischen Darstellung verglichen und eine Verknüpfung ausgewählt.

Damit der richtigen Verknüpfung gefolgt werden kann, wird bei einem Stopp der Industrieanlage ein vergangener oder deren aktueller Systemzustand mit der zumindest einen grafischen Darstellung verglichen. Das Vergleichen des Systemzustands der Industrieanlage mit der zumindest einen grafischen Darstellung erfolgt vorzugsweise durch einen Bediener. Entspricht eine grafische Darstellung dem aktuellen Systemzustand der Industrieanlage, so kann die Verknüpfung ausgewählt werden und der Verknüpfung zur entsprechenden Programmstelle im Applikationsprogramm gefolgt werden. Weiterhin kann der Bediener einen vergangenen Systemzustand, den der Bediener als fehlerhaft erkannt hat, mit der zumindest einen grafischen Darstellung vergleichen, um die entsprechende Programmstelle im Applikationsprogramm aufzufinden. Ebenso ist es möglich, dass das Vergleichen automatisch ausgeführt wird, indem beispielsweise ein aktuelles Bild der Industrieanlage aufgenommen wird und mit der grafischen Darstellung maschinell verglichen wird. In diesem Fall kann das Auffinden einer Programmstelle, mit der die grafische Darstellung verknüpft ist, unter Verwendung einer Verknüpfung zwischen der grafischen Darstellung und einer Programmstelle automatisiert erfolgen und bedarf keines Eingreifens eines Bedieners.

Das Vergleichen wird notwendig, wenn z.B. die Industrieanlage stoppt, d.h. die Ausführung des Applikationsprogramms gestoppt wird. Ein Stopp der Industrieanlage bzw. des Applikationsprogramms kann dabei beispielsweise vom Bediener manuell erzwungen werden, oder z.B. durch einen Fehler in der Industrieanlage hervorgerufen werden, die das automatische Eingreifen einer Sicherheitseinrichtung zur Folge hat.

Durch die beschriebene Verknüpfung von grafischer Darstellung und Programmstelle ist es einem Bediener möglich, die entsprechende Programmstelle schnell zu finden und/oder einen entsprechenden Parametersatz aufzurufen, die/der geändert werden soll. Weiterhin kann durch diese Verknüpfung der Schulungsaufwand von Personen, die Applikationsprogramme abändern oder finalisieren sollen, signifikant reduziert werden. Überdies kann die Fehlerrate reduziert werden, da die betreffenden Programmstellen schnell und sicher erkannt werden können. Dies steigert die Effizienz.

Vorzugsweise wird die bereitgestellte zumindest eine grafische Darstellung mit der zumindest einen Programmstelle des zumindest einen Applikationsprogramms durch die folgenden Verfahrensschnitte verknüpft:
- Schrittweise Ausführen des zumindest einen Applikationsprogramms, wobei das zumindest eine Applikationsprogramm zumindest teillauffähig ist, wobei jeder Ausführungsschritt vorzugsweise an einer Programmstelle beginnt und/oder endet;
- Erstellen zumindest einer grafischen Darstellung zumindest eines Teils der Industrieanlage unmittelbar vor, nach oder während der Ausführung eines Ausführungsschritts;
- Verknüpfen der erstellten grafischen Darstellung mit der entsprechenden Programmstelle des Applikationsprogramms.

Vorzugsweise ist das zumindest eine Applikationsprogramm zumindest teillauffähig, sodass die Industrieanlage entsprechend dem Applikationsprogramm gesteuert werden kann. Das anschließende Erstellen der zumindest einen grafischen Darstellung erfolgt vorzugsweise automatisiert. Beispielsweise wird an jeder Programmstelle des Applikationsprogramms, bzw. beim Durchlaufen der Programmstelle beim Ausführen des Applikationsprogramms, eine grafische Darstellung der zumindest einen Industrieanlage erstellt. Ebenso erfolgt die Verknüpfung der erstellten grafischen Darstellung mit der entsprechenden Programmstelle des Applikationsprogramms vorzugsweise automatisiert. Somit kann zum einen sichergestellt werden, dass die grafische Darstellung der entsprechenden Programmstelle korrekt zugeordnet wird. Zum anderen wird sichergestellt, dass jede Programmstelle mit einer grafischen Darstellung verknüpft ist.

Vorzugsweise wird zumindest einem Bereich einer grafischen Darstellung eine Verknüpfung mit der entsprechenden Programmstelle des Applikationsprogramms zugewiesen, welcher Bereich angewählt werden kann, um der Verknüpfung zu folgen. Vorzugsweise ist der Bereich für die entsprechende Programmstelle charakteristisch. Beispielsweise kann in dem Bereich ein Punkt oder eine Kontur eines Werkstücks dargestellt sein, deren Bearbeitung an der Programmstelle abgeschlossen ist. Ist eine grafische Darstellung erstellt, so kann nach der Auswahl eines Bereiches dem Bereich eine Verknüpfung, vorzugsweise mit Hilfe eines GUIs, zugewiesen werden. Durch Anwählen des Bereichs, beispielsweise durch einen Touch-Befehl, einen Mausklick oder dergleichen, kann dann der Verknüpfung gefolgt werden.

Ebenso ist es möglich, dass einer grafischen Darstellung mehrere Bereiche zugewiesen werden, die mit unterschiedlichen Programmstellen verknüpft sind. Wird beispielsweise ein Werkstück in der grafischen Darstellung dargestellt, so können charakteristischen Konturen oder Punkten des Werkstücks unterschiedliche Bereiche zugewiesen werden, die über unterschiedliche Verknüpfungen mit entsprechenden Programmstellen verknüpft werden. Somit wird die Anzahl der grafischen Darstellungen reduziert und die Übersichtlichkeit und Bedienbarkeit des Verfahrens verbessert. Vorzugsweise können auf einer grafischen Darstellung zumindest zwei, zumindest vier, zumindest sechs oder zumindest zehn Verknüpfungen und entsprechende Bereiche bereitgestellt werden.

Zeigt die grafische Darstellung beispielsweise ein Werkstück, wobei charakteristischen Konturen und/oder Punkten des Werkstücks unterschiedliche Bereiche zugewiesen sind, d.h. mit unterschiedlichen Programmstellen verknüpft sind, so kann im Nachhinein ein Prozessergebnis, wie etwa ein bearbeitetes Werkstück dazu dienen, aktuelle und/oder vergangene Systemzustände mit der grafischen Darstellung zu vergleichen und eine gewünschte Programmstelle aufzufinden. Soll beispielsweise ein Schweißprozess eingerichtet werden und werden bereichsweise schlechte Schweißnähte erzielt, so kann anhand eines Vergleichs eines bearbeiteten Werkstücks mit der zumindest einen grafischen Darstellung, welche unterschiedliche Bereiche aufweist, die Programmstelle im Applikationsprogramm aufgefunden werden, die für die schlechten Schweißnähte verantwortlich ist.

Vorzugsweise erfolgt das Zuweisen einer Verknüpfung zu einem Bereich einer grafischen Darstellung durch manuelles Anwählen des Bereichs, wobei das manuelle Anwählen vorzugsweise mittels Drag-and-Drop Operation einer anwählbaren Schaltfläche erfolgt. Insbesondere erfolgt das manuelle Anwählen mit Hilfe einer grafischen Benutzeroberfläche, GUI. Ist beispielsweise ein Bereich der grafischen Darstellung charakteristisch für eine Programmstelle, so kann eine Schaltfläche, welche eine Verknüpfung zur entsprechenden Programmstelle umfasst in dem entsprechenden Bereich der grafischen Darstellung manuell platziert werden. Vorzugsweise ist die anwählbare Schaltfläche in der grafischen Darstellung sichtbar. Sie kann jedoch auch verdeckt vorliegen, so dass der Bereich der Darstellung vollständig sichtbar bleibt.

Das manuelle Auswählen eines Bereichs und das manuelle Hinterlegen einer anwählbaren Schaltfläche ermöglicht es, weitere Verknüpfungen mit Programmstellen in einer grafischen Darstellung zu hinterlegen. Vorzugsweise erfolgt das Zuweisen einer Verknüpfung zu einem Bereich einer grafischen Darstellung automatisch, wobei beim Erfassen der zumindest einen grafischen Darstellung Bildmarken miterfasst werden und wobei die Bildmarken einem Koordinatensystem der Industrieanlage fest zugeordnet sind, so dass die erfasste grafische Darstellung mit dem Koordinatensystem der Industrieanlage in Deckung gebracht werden kann. Bildmarken sind typischerweise charakteristische Punkte und/oder Konturen eines Werkstücks, welches bezüglich des Industrieanlagenkoordinatensystem fest positioniert ist. Ebenso können Bildmarken charakteristische Punkte oder Konturen der Umgebung sein. Weiterhin ist es möglich, eigenständige Bildmarken, wie sie beispielsweise aus Augmented-Reality Anwendungen bekannt sind, an der Industrieanlage bereitzustellen. Derartige Bildmarken können beispielsweise Reflektoren, Farbcodes, LEDs, RFID-Tags und dergleichen sein.

Werden die Bildmarken erfasst, und kann der aktuelle Systemzustand der Industrieanlage, wie beispielsweise eine Stellung eines Manipulators, mit Bezug auf die Bildmarken beschrieben werden, so ist es möglich, einem Bereich einer grafischen Darstellung automatisch eine Verknüpfung zu einer entsprechenden Programmstelle zuzuweisen. Um die Verknüpfung automatisch zuzuweisen, wird die erfasste grafische Darstellung mittels der Bildmarken in Deckung mit dem Industrieanlagenkoordinatensystem gebracht. Ist einem Ausführungsschritt bzw. einer Programmstelle ein bestimmter Koordinatenpunkt zugeordnet, so kann dieser in der grafischen Darstellung angezeigt werden, und um diesen spezifischen Koordinatenpunkt ein entsprechender Bereich definiert werden. Dies verringert den Zeitaufwand gegenüber der manuellen Herstellung einer Verknüpfung.

Die zumindest eine grafische Darstellung ist ein Foto der Industrieanlage. Fotos sind vorteilhaft, da diese leicht erstellt werden können und keine weitere Modellierung der Industrieanlage benötigen, wie sie beispielsweise nötig wäre, wenn nur eine abstrahierte Darstellung der Industrieanlage in der grafischen Darstellung angezeigt werden soll.

Vorzugsweise ist die zumindest eine grafische Darstellung eine bewegte grafische Darstellung der Industrieanlage, wobei die bewegte grafische Darstellung eine Zeitachse umfasst und wobei die bewegte grafische Darstellung mit zumindest einer Programmstelle des zumindest einen Applikationsprogramms über einen Zeitpunkt auf der Zeitachse verknüpft ist. Eine bewegte grafische Darstellung kann beispielsweise ein Video der Industrieanlage sein oder eine (animierte) Abfolge von Einzelbildern. Die Zuordnung einzelner Programmstellen zu der bewegten grafischen Darstellung über eine Zeitachse ermöglicht eine einfache Verknüpfung unterschiedlicher Programmstellen mit der bewegten grafischen Darstellung. Zudem sind bewegte grafische Darstellungen für einen Bediener sehr leicht zu erfassen, wodurch Programmstellen schneller gefunden werden können. Vorzugsweise, werden bewegte grafische Darstellung zumindest eines Teils der Industrieanlage während der Ausführung eines Ausführungsschritts erstellt.

Vorzugsweise werden zumindest zwei grafische Darstellungen bereitgestellt, wobei die zumindest zwei grafischen Darstellungen in einer Liste angezeigt werden, die vorzugsweise scrollfähig ist.

Nach dem Erstellen bzw. Aufnehmen der grafischen Darstellungen (Aufnahmemodus) können die grafischen Darstellungen zum vereinfachten Auffinden von Programmstellen im Applikationsprogramm verwendet werden (Anzeigemodus). Dazu lässt sich ein Bediener die grafischen Darstellungen anzeigen und vergleicht diese mit dem aktuellen Systemzustand der Industrieanlage. Insbesondere bei kleinen elektrischen Anzeigen, wie sie beispielsweise auf Tablets oder Smartphones bereitgestellt sind, kann nur eine begrenzte Anzahl von grafischen Darstellungen gleichzeitig angezeigt werden. Um dennoch einen schnellen Vergleich der grafischen Darstellungen mit dem aktuellen Systemzustand der Industrieanlage zu ermöglichen, ist es vorteilhaft, die einzelnen Bilder hintereinander in einer Liste anzuzeigen. Das Scrollen durch die Liste ermöglicht es, die Anzeige der einzelnen grafischen Darstellungen schnell abzuwechseln, sodass die entsprechende grafische Darstellung, die dem aktuellen Systemzustand der Industrieanlage entspricht, schnell gefunden werden kann.

Vorzugsweise stoppt das Applikationsprogramm falls ein Stopp manuell erzwungen wird und/oder falls eine Sicherheitseinrichtung der Industrieanlage einen Stoppbefehl ausgibt. Wird das Applikationsprogramm beispielsweise nicht korrekt ausgeführt, so kann der Bediener einen Stopp des Applikationsprogramms manuell hervorrufen. Ebenso kann der Stopp des Applikationsprogramms das Erreichen des Endes des Applikationsprogramms bedeuten. Ebenso kann ein Stoppbefehl durch eine Sicherheitseinrichtung der Industrieanlage hervorgerufen werden. Dies ist typischerweise dann der Fall, wenn Sicherheitseinrichtungen ansprechen. Diese können beispielsweise ein Notausschalter sein. Ebenso kann eine Bereichsüberwachung eingreifen, wie beispielsweise eine Geschwindigkeitsüberwachung, eine Beschleunigungsüberwachung, eine Kraftüberwachung und/oder eine Momentenüberwachung oder dergleichen.

Vorzugsweise wird durch das Auffinden einer Programmstelle, unter Verwendung einer Verknüpfung zwischen der grafischen Darstellung und einer Programmstelle, eine Änderung des zumindest einen Applikationsprogramms ermöglicht, indem einem Bediener eine Benutzerschnittstelle angezeigt wird, wobei mittels der Benutzerschnittstelle Parameter des Applikationsprogramms geändert werden können.

Die Benutzerschnittstelle ist vorzugsweise verschieden von der bloßen Anzeige des originalen Programmcodes des Applikationsprogramms. Beispielsweise kann die Benutzerschnittstelle eine Parameterliste umfassen, welche es erlaubt, einzelne Parameter, welche einem Ausführungsschritt zugeordnet sind zu ändern und/oder zu optimieren. Parameter können sowohl Bereichsparameter, wie etwa Koordinaten einer Bewegung, Kraftüberwachungsschwellen, Momentüberwachungsschwellen und dergleichen sein, oder Ablaufparameter sein, die die Reihenfolge der Ausführungsschritte beeinflussen. Dies ist beispielsweise möglich, indem die einer SWITCH oder IF-ELSE-Anweisung zugeordneten Parameter verändert werden. Somit lässt sich neben den eigentlichen Ausführungsschritten auch deren Reihenfolge im Applikationsprogramm schnell verändern.

Durch das Auffinden der Programmstelle, unter Verwendung einer Verknüpfung zwischen der grafischen Darstellung und einer Programmstelle, eine Änderung des zumindest einen Applikationsprogramms ermöglicht, indem einem Bediener ein Editor angezeigt wird, wobei der Editor vorzugsweise ein grafisches Model des Abbildungsprogramms umfasst, und wobei mittels des Editors Änderungen im Applikationsprogram vorgenommen werden können.

Ein Editor, welcher ein grafisches Modell des Applikationsprogramms anzeigt, ermöglicht eine übersichtliche Darstellung der aufeinanderfolgenden Ausführungsschritte. Somit ist die Änderung der Reihenfolge einzelner Ausführungsschritte mittels eines Editors vereinfacht.

Die zumindest eine Verknüpfung der zumindest einen grafischen Darstellung wird mit der entsprechenden Programmstelle und/oder der zugewiesene Bereich der Darstellung automatisch entsprechend der Änderungen von Parametern des Applikationsprogramms und/oder entsprechend der Änderung des Applikationsprogramms aktualisiert. Wird beispielsweise ein charakteristischer Punkt einer grafischen Darstellung, welcher einer Programmstelle zugewiesen wird, durch die Änderung der Parameter der entsprechenden Programmstelle/des entsprechenden Ausführungsschritts verändert, so kann der Bereich oder die grafische Darstellung selbst direkt angepasst werden. Somit ist sichergestellt, dass die grafischen Darstellungen immer aktuell sind und dem entsprechenden Applikationsprogramm entsprechen.

Vorzugsweise wird die zumindest eine grafische Darstellung auf einer Steuerungseinrichtung der Industrieanlage angezeigt, wobei die Steuerungseinrichtung vorzugsweise eine handgehaltene Steuerungseinrichtung, wie ein Tablet-Computer oder ein Smartphone ist. Wird die grafische Darstellung auf einer Steuerungseinrichtung der Industrieanlage angezeigt, so kann sichergestellt werden, dass ein Vergleich der grafischen Darstellung und der Industrieanlage unmittelbar möglich ist, da die Steuerungseinrichtung typischerweise in der Nähe der Industrieanlage eingerichtet ist. Zudem erlaubt die Verwendung eines Tablet-Computers oder eines Smartphones, eben diesen Tablet-Computer oder das Smartphone universell einzusetzen und auch mehrere Industrieanlagen mit derselben zu konfigurieren.

Die Aufgabe der Erfindung wird zudem durch ein Computerprogramm zum vereinfachten Ändern von Applikationsprogrammen einer Industrieanlage gelöst. Dabei umfasst das Computerprogramm zumindest eine Schnittstelle zu zumindest einem Applikationsprogramm einer Industrieanlage, wobei das zumindest eine Applikationsprogramm mehrere Programmstellen aufweist, sowie zumindest eine grafische Darstellung, wobei die zumindest eine grafische Darstellung zumindest einen Systemzustand der Industrieanlage zeigt, wobei der Systemzustand einer Programmstelle entspricht und die grafische Darstellung mit zumindest einer Programmstelle des zumindest einen Applikationsprogramms verknüpft ist.

Weiterhin umfasst das Computerprogramm Anweisungen, die wenn sie von einer Computervorrichtung oder einem Computersystem umfassend einen Speicher und einen Prozessor ausgeführt werden, die Computervorrichtung oder das Computersystem veranlassen die folgenden Schritte auszuführen:
Anzeigen der zumindest einen grafischen Darstellung zum Vergleichen des aktuellen Systemzustands der Industrieanlage mit der zumindest einen grafischen Darstellung ; Empfangen einer Benutzereingabe zur Auswahl einer grafischen Darstellung oder einer Verknüpfung zwischen einer grafischen Darstellung und einer Programmstelle und Folgen der Verknüpfung zwischen der ausgewählten grafischen Darstellung und einer Programmstelle oder der ausgewählten Verknüpfung zwischen einer grafischen Darstellung und einer Programmstelle, um dem Benutzer die Änderung des Applikationsprogramms zu ermöglichen. Das Computerprogramm ermöglicht es, das Verfahren wie oben beschrieben auszuführen. Somit können Änderungen im Applikationsprogramm schneller ausgeführt werden und sind weniger fehleranfällig.

Vorzugsweise umfasst das Computerprogramm weiterhin die folgenden Anweisungen:
Anweisungen zum schrittweisen Ausführen des zumindest einen Applikationsprogramms, wobei das zumindest eine Applikationsprogramm zumindest teillauffähig ist, wobei jeder Ausführungsschritt vorzugsweise an einer Programmstelle beginnt oder endet;
Anweisungen zum Erfassen und Speichern zumindest einer grafischen Darstellung zumindest eines Teils der Industrieanlage unmittelbar vor oder nach der Ausführung eines Ausführungsschritts; und
Anweisungen zum Verknüpfen der erfassten grafischen Darstellung mit der entsprechenden Programmstelle des Applikationsprogramms.

Die Anweisung zum schrittweisen Ausführen des Applikationsprogramms ermöglicht es an jeder Programmstelle eine entsprechende grafische Darstellung zu erfassen und abzuspeichern. Die Verknüpfung der grafischen Darstellung mit der entsprechenden Programmstelle erfolgt vorzugsweise über die Schnittstelle, die das Computerprogramm und/oder seine Laufzeitumgebung bereitstellt.

Vorzugsweise umfasst das Computerprogramm weiterhin Anweisungen zum Ausführen des oben beschriebenen Verfahrens.

Weiterhin wird die Aufgabe gelöst durch eine Computervorrichtung oder ein Computersystem umfassend einen Prozessor und einen Speicher, eingerichtet zum Ausführen des oben beschriebenen Computerprogramms. Vorzugsweise ist die Computervorrichtung oder das Computersystem Teil der Industrieanlage.

### Beschreibung der Figuren

Im Folgenden wird die Erfindung unter Bezugnahme auf die angefügten Figuren näher erläutert. Dabei zeigt:
- Fig. 1: eine Industrieanlage;
- Fig. 2: ein Modell des Applikationsprogramms zur Steuerung der Industrieanlage;
- Fig. 3: ein weiteres Modell des Applikationsprogramms zur Steuerung der Industrieanlage;
- Fig. 4: eine grafische Darstellung der Industrieanlage nach Fig. 1;
- Fig. 5A: ein Ablaufdiagramm eines Verfahrens zum Verknüpfen einer Programmstelle mit einer grafischen Darstellung und
- Fig. 5B: ein Ablaufdiagramm eines Verfahrens zum vereinfachten Ändern von Applikationsprogrammen zur Steuerung einer Industrieanlage.

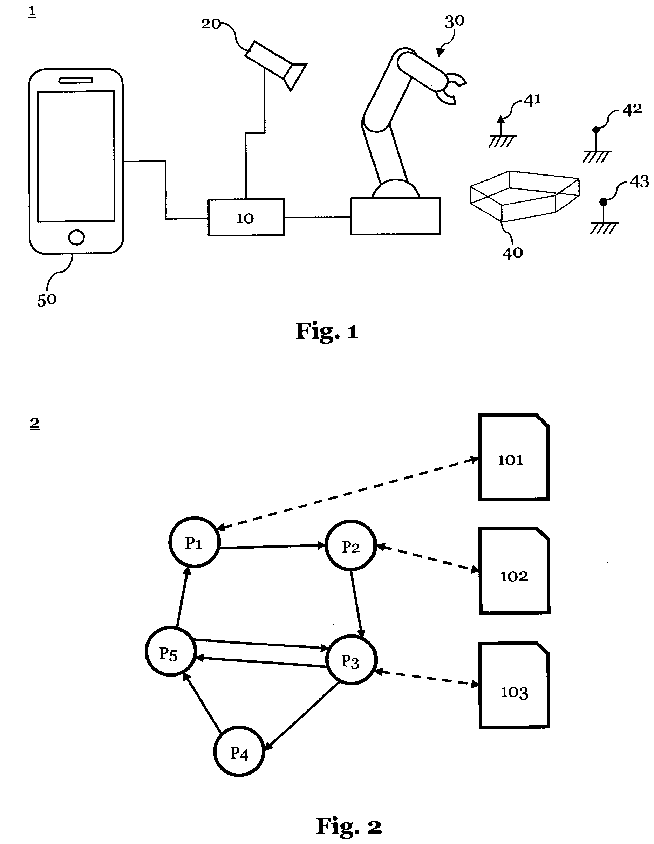

Insbesondere zeigt Figur 1 eine Industrieanlage 1 umfassend eine Steuerungseinrichtung 10, welche dazu eingerichtet ist die Industrieanlage 1 zu steuern. Der Industrieanlage 1 ist beispielsweise ein Manipulator 30 zugeordnet, welcher dazu eingerichtet ist, das Werkstück 40 zu bearbeiten. Eine Aufnahmevorrichtung, wie beispielsweise eine Kamera 20 ist dazu eingerichtet, grafische Darstellungen der Industrieanlage bzw. von Teilen der Industrieanlage zu erstellen. Eine optische Anzeigevorrichtung 50 ist der Steuerungseinrichtung 10 der Industrieanlage 1 zugeordnet.

Auf der optischen Anzeige 50, die beispielsweise ein Tablet-Computer oder ein Smartphone ist, können die im Verfahrensanspruch 1 genannten grafischen Darstellungen angezeigt werden. Ebenso können vorzugsweise die Änderungen des Applikationsprogramms der Industrieanlage 1 auf der grafischen Anzeige 50 vorgenommen werden. Dazu kann die optische Anzeige 50 über einen berührungssensitiven Bildschirm verfügen oder mit einem externen Eingabegerät, wie beispielsweise einer Tastatur, versehen sein. Die Bildmarken 41, 42, 43 ermöglichen es, von der Kamera 20 erfasste grafische Darstellungen über eine Projektionsmatrix dem Koordinatensystem der Industrieanlage 1 zuzuordnen. Somit können einzelne charakteristische Punkte von z.B. dem Werkstück 40 bestimmten Programmstellen zugeordnet werden.

Figur 2 zeigt ein Programmmodell 2 eines Applikationsprogramms zur Steuerung einer Industrieanlage 1. Die einzelnen Ausführungsschritte sind mit Pfeilen mit durchgezogener Linie dargestellt. Sie werden durch Programmstellen P1-P5 begrenzt. Im vorliegend gezeigten Modell beginnt das Programm beispielsweise bei Programmstelle P1 und endet bei Programmstelle P5. Beispielsweise kann in Programmstelle P1 ein Manipulator ein Werkstück einmessen, in Programmstelle P2 mit der Bearbeitung des Werkstücks beginnen und diese in Programmstelle P3 abschließen. Abhängig von der erfolgreichen Durchführung kann das Programm in P5 beendet werden oder in Ausführungsschritten über Programmstelle P4 die bisherige Bearbeitung (s. P1 bis P3) korrigiert werden. Den Programmstellen P1 bis P3 sind grafische Darstellungen 101, 102, 103 zugeordnet und mit diesen verknüpft. Grundsätzlich kann jeder Programmstelle eine eigene grafische Darstellung zugeordnet sein. Ebenso ist es möglich, dass einzelne Programmstellen mit keiner grafischen Darstellung verknüpft sind oder eine grafische Darstellung mit mehreren Programmstellen verknüpft ist. In diesem Fall sind vorzugsweise Bereiche definiert, die eine eindeutige Verknüpfung der Programmstelle mit dem Bereich der grafischen Darstellung ermöglichen.

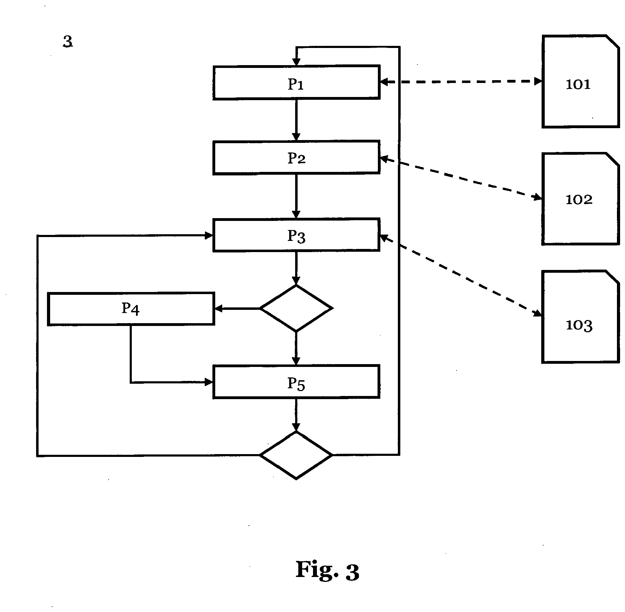

Figur 3 zeigt das Applikationsprogramm, welches in Figur 2 dargestellt wurde in einer anderen Darstellung. Die Bezugszeichen entsprechen sich. Die in Figur 2 und 3 gezeigten Darstellungen können beispielsweise in einem Editor angezeigt werden, wenn Änderungen am Applikationsprogramm vorgenommen werden sollen.

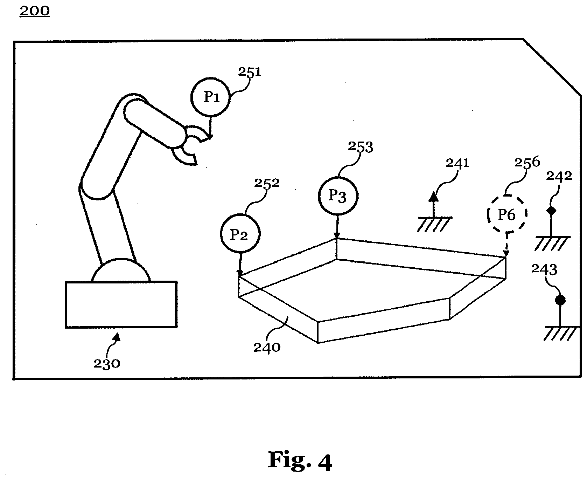

Figur 4 zeigt eine grafische Darstellung 200 einer Industrieanlage. Insbesondere wird ein Teil der Industrieanlage dargestellt, welcher einen Manipulator 230 und ein Werkstück 240 umfasst. Bestimmte Bereiche der grafischen Darstellung 251, 252, 253 sind mit den einzelnen Programmstellen P1, P2, P3 eines Applikationsprogramms verknüpft. Die Bildmarken 241, 242, 243 ermöglichen die Zuordnung der grafischen Darstellung zu einem Koordinatensystem des Manipulators. Der Bereich 256 kann beispielsweise mit einer weiteren Programmstelle P6 verknüpft sein.

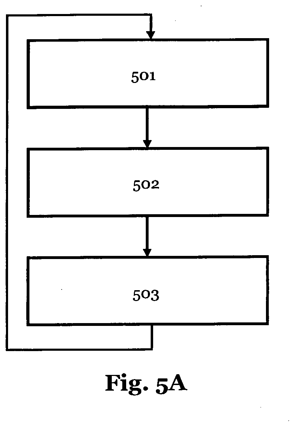

Figur 5A zeigt ein Verfahren zum Verknüpfen einer Programmstelle mit einer grafischen Darstellung. Dabei wird in Verfahrensschritt 501 das Applikationsprogramm schrittweise ausgeführt. In Verfahrensschritt 502 wird zumindest eine grafische Darstellung der Industrieanlage erfasst und in Schritt 503 wird die erfasste grafische Darstellung mit der entsprechenden Programmstelle des Applikationsprogramms verknüpft. Das Verfahren wird vorzugsweise solange wiederholt, bis das Applikationsprogramm beendet ist und jeder vorgesehenen Programmstelle eine grafische Darstellung zugeordnet ist.

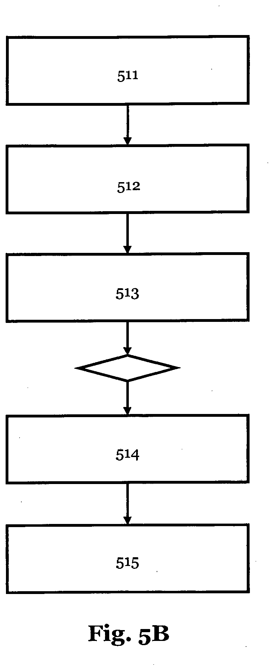

Figur 5B zeigt ein Ablaufdiagramm eines Verfahrens zum vereinfachten Ändern von Applikationsprogrammen zur Steuerung von Industrieanlagen. In einem ersten Verfahrensschritt 511 wird zumindest ein Applikationsprogramm auf einer Industrieanlage bereitgestellt. In einem zweiten Verfahrensschritt 512 wird zumindest eine grafische Darstellung bereitgestellt, wobei die zumindest eine grafische Darstellung zumindest einen Systemzustand der Industrieanlage zeigt. In Ausführungsschritt 513 wird das Applikationsprogramm ausgeführt, und falls dieses stoppt, werden die Verfahrensschritte 514 und 515 ausgeführt. In Verfahrensschritt 514 wird der aktuelle Systemzustand der Industrieanlage mit der zumindest einen grafischen Darstellung verglichen. In Verfahrensschritt 515 kann der Verknüpfung zwischen der grafischen Darstellung und einer Programmstelle gefolgt werden, um das Applikationsprogramm zu ändern.

### Bezugszeichenliste

- 1: Industrieanlage
- 10: Steuerungseinrichtung
- 20: Kamera
- 30: Manipulator
- 40: Werkstück
- 50: grafische Anzeige
- 41, 42, 43: Bildmarken
- P1-P5: Programmstelle
- 101,102,103, 200: grafische Darstellungen
- 230: Manipulator
- 240: Werkstück
- 241, 242, 243: Bildmarken
- 251, 252, 253, 256: Bereiche, verknüpft mit Programmstelle
- 501: schrittweises Ausführen des zumindest eines Applikationsprogramms
- 502: Erfassen zumindest einer grafischen Darstellung
- 503: Verknüpfen der erfassten grafischen Darstellung mit der entsprechenden Programmstelle
- 511: Bereitstellen zumindest eines Applikationsprogramms
- 512: Bereitstellen zumindest einer grafischen Darstellung
- 513: Ausführen des Applikationsprogramms
- 514: Vergleichen des aktuellen Systemzustands mit der zumindest einen grafischen Darstellung
- 515: Folgen einer Verknüpfung zwischen der grafischen Darstellung einer Programmstelle

## Patentansprüche

1. Computerimplementiertes Verfahren zum Ändern von Applikationsprogrammen (2, 3) einer Industrieanlage (1), umfassend die folgenden Verfahrensschritte:
a) Bereitstellen zumindest eines Applikationsprogramms (2, 3) auf einer Industrieanlage (1), wobei das zumindest eine Applikationsprogramm (2, 3) mehrere Programmstellen (P1 bis P5) aufweist;
b) Bereitstellen zumindest einer grafischen Darstellung (101 bis 103; 200), wobei die zumindest eine grafische Darstellung (101 bis 103; 200) ein Foto der Industrieanlage (1) ist, wobei die zumindest eine grafische Darstellung (101 bis 103; 200) zumindest einen Systemzustand der Industrieanlage (1) zeigt, wobei der Systemzustand einer der mehreren Programmstellen (P1 bis P5) entspricht und jede der grafischen Darstellungen (101 bis 103) mit zumindest einer der mehreren Programmstellen (P1 bis P5) des zumindest einen Applikationsprogramms (2, 3) verknüpft ist;
c) Ausführen des zumindest einen Applikationsprogramms (2, 3) und falls das zumindest eine Applikationsprogramm stoppt, Ausführen der folgenden Verfahrensschritte:
d1) Anzeigen der zumindest einen grafischen Darstellung zum Vergleichen des aktuellen Systemzustands der Industrieanlage mit der zumindest einen grafischen Darstellung,
d2) Empfangen einer Benutzereingabe zur Auswahl einer grafischen Darstellung oder einer Verknüpfung zwischen einer grafischen Darstellung und einer der mehreren Programmstellen (P1 bis P5) und
e) Auffinden einer der mehreren Programmstellen (P1 bis P5), mit der die ausgewählte grafische Darstellung (101 bis 103) verknüpft ist, unter Verwendung der Verknüpfung zwischen der zumindest einen grafischen Darstellung (101 bis 103) und der einen der mehreren Programmstellen (P1 bis P5)
wobei das Auffinden der Programmstelle (P1 bis P5), eine Änderung des zumindest einen Applikationsprogramms (2, 3) ermöglicht, indem einem Bediener ein Editor angezeigt wird,
wobei der Editor vorzugsweise ein grafisches Modell des zumindest einen Applikationsprogramms (2, 3) umfasst und wobei mittels des Editors Änderungen in dem zumindest einen Applikationsprogramm (2, 3) vorgenommen werden können, wobei die Verknüpfung der zumindest einen grafischen Darstellung (101 bis 103; 200) mit der entsprechenden einen der mehreren Programmstellen (P1 bis P5) automatisch, entsprechend der Änderungen des Applikationsprogramms (2, 3) aktualisiert wird; und
f) Ausführen des zumindest einen geänderten Applikationsprogramms zur Steuerung der Industrieanlage.

2. Verfahren nach dem vorhergehenden Anspruch, wobei die bereitgestellte zumindest eine grafischen Darstellung (101 bis 103; 200) mit der zumindest einen Programmstelle (P1-P5) des zumindest einen Applikationsprogramms (2, 3) durch die folgenden Verfahrensschnitte verknüpft wird:
- Schrittweises Ausführen des zumindest einen Applikationsprogramms (2, 3), wobei das zumindest eine Applikationsprogramm (2, 3) zumindest teillauffähig ist, wobei jeder Ausführungsschritt vorzugsweise an einer der mehreren Programmstellen (P1 bis P5) beginnt oder endet;
- Erstellen zumindest einer grafischen Darstellung (101 bis 103; 200) zumindest eines Teils der Industrieanlage (1) unmittelbar vor, während oder nach der Ausführung eines Ausführungsschritts;
- Verknüpfen der erstellten grafischen Darstellung (101 bis 103; 200) mit der entsprechenden Programmstelle (P1 bis P5) des Applikationsprogramms.

3. Verfahren nach einem der vorhergehenden Ansprüche, wobei zumindest einem Bereich (251 bis 253; 256) einer der zumindest einen grafischen Darstellung (101 bis 103; 200) eine Verknüpfung mit der entsprechenden Programmstelle (P1 bis P5) des Applikationsprogramms (2, 3) zugewiesen ist, welcher Bereich angewählt werden kann, um der Verknüpfung zu folgen.

4. Verfahren nach einem der vorhergehenden Ansprüche, wobei das Zuweisen einer Verknüpfung zu einem Bereich (251 bis 253; 256) einer der zumindest einen grafischen Darstellung (101 bis 103; 200) durch manuelles Auswählen des Bereichs erfolgt, und wobei das manuelle Auswählen vorzugsweise mittels drag-and-drop Operation einer anwählbaren Schaltfläche erfolgt.

5. Verfahren nach einem der vorhergehenden Ansprüche, wobei das Zuweisen einer Verknüpfung zu einem Bereich (251 bis 253; 256) einer der zumindest einen grafischen Darstellung (101 bis 103; 200) automatisch erfolgt, wobei
beim Erfassen der zumindest einen grafischen Darstellung (101 bis 103; 200) Bildmarken (241, 242, 243) mit erfasst werden, und wobei
die Bildmarken (241, 242, 243) einem Koordinatensystem der Industrieanlage (1) fest zugeordnet sind, sodass die erfasste grafische Darstellung (101 bis 103; 200) mit dem Koordinatensystem der Industrieanlage (1) in Deckung gebracht werden kann.

6. Verfahren nach einem der Ansprüche 1 bis 3, wobei die zumindest eine grafische Darstellung (101 bis 103; 200) eine bewegte grafische Darstellung der Industrieanlage (1) ist, wobei die bewegte grafische Darstellung eine Zeitachse umfasst, und wobei die bewegte grafische Darstellung (101 bis 103; 200) mit zumindest einer Programmstelle (P1 bis P5) des zumindest einen Applikationsprogramms (2, 3) über einen Zeitpunkt auf der Zeitachse verknüpft ist.

7. Verfahren nach einem der vorhergehenden Ansprüche, wobei zumindest zwei grafische Darstellungen (101 bis 103; 200) bereitgestellt werden, und wobei die zumindest zwei grafischen Darstellungen (101 bis 103; 200) in einer Liste angezeigt werden, die vorzugsweise scrollfähig ist.

8. Verfahren nach einem der vorhergehenden Ansprüche, wobei das zumindest eine Applikationsprogramm (2, 3) stoppt, falls ein Stopp manuell erzwungen wird und/oder falls eine Sicherheitseinrichtung der Industrieanlage (1) einen Stopp-Befehl ausgibt.

9. Verfahren nach einem der Ansprüche 4-8, wobei der zugewiesene Bereich (251 bis 253) automatisch entsprechend der Änderungen des zumindest einen Applikationsprogramms (2, 3) aktualisiert wird.

10. Verfahren nach einem der vorhergehenden Ansprüche, wobei die zumindest eine grafische Darstellung (101 bis 103; 200) auf einer Steuerungseinrichtung der Industrieanlage angezeigt wird, wobei die Steuerungseinrichtung vorzugsweise eine handgehaltene Steuerungseinrichtung, wie ein Tablet-Computer oder ein Smartphone ist.

11. Computerprogramm zum Ändern von Applikationsprogrammen (2, 3) einer Industrieanlage (1), umfassend:
zumindest eine Schnittstelle zu zumindest einem Applikationsprogramm (2, 3) einer Industrieanlage (1), wobei das zumindest eine Applikationsprogramm (2, 3) mehrere Programmstellen (P1 bis P5) aufweist;
zumindest eine grafische Darstellung (101 bis 103; 200), wobei die zumindest eine grafische Darstellung (101 bis 103; 200) ein Foto der Industrieanlage (1) ist, wobei die zumindest eine grafische Darstellung (101 bis 103; 200) zumindest einen Systemzustand der Industrieanlage (1) zeigt, wobei der Systemzustand einer der mehreren Programmstellen (P1 bis P5) entspricht und jede der grafischen Darstellungen (101 bis 103) mit zumindest einer der mehreren Programmstellen (P1 bis P5) des zumindest einen Applikationsprogramms (2, 3) verknüpft ist;
wobei das Computerprogramm Anweisungen umfasst, die, wenn sie von einer Computervorrichtung oder einem Computersystem umfassend einen Speicher und einen Prozessor ausgeführt werden, die Computervorrichtung oder das Computersystem veranlassen, ein Verfahren nach Anspruch 1 bis 10 auszuführen.

12. Computervorrichtung oder Computersystem umfassend einen Speicher und einen Prozessor, eingerichtet zum Ausführen des Computerprogramms nach Anspruch 11.

## Claims

1. Computer-implemented method for modifying application programs (2, 3) of an industrial plant (1), comprising the following method steps:
a) providing at least one application program (2, 3) on an industrial plant (1), wherein the at least one application program (2, 3) has multiple program points (P1 to P5);
b) providing at least one graphical representation (101 to 103; 200), wherein the at least one graphical representation (101 to 103; 200) is a photograph of the industrial plant (1), wherein the at least one graphical representation (101 to 103; 200) shows at least one system state of the industrial plant (1), wherein the system state corresponds to one of the multiple program points (P1 to P5) and each of the graphical representations (101 to 103) is linked with at least one of the multiple program points (P1 to P5) of the at least one application program (2, 3);
c) executing the at least one application program (2, 3) and, if the at least one application program stops, executing the following method steps:
d1) displaying the at least one graphical representation in order to compare the current system state of the industrial plant with the at least one graphical representation,
d2) receiving a user input in order to select a graphical representation or a link between a graphical representation and one of the multiple program points (P1 to P5), and
e) finding one of the multiple program points (P1 to P5) with which the selected graphical representation (101 to 103) is linked, using the link between the at least one graphical representation (101 to 103) and the one of the multiple program points (P1 to P5),
wherein the finding of the program point (P1 to P5) allows a modification of the at least one application program (2, 3) by virtue of an editor being displayed to a user, wherein the editor preferably comprises a graphical model of the at least one application program (2, 3) and wherein modifications in the at least one application program (2, 3) can be performed by means of the editor, wherein the link of the at least one graphical representation (101 to 103; 200) with the corresponding one of the multiple program points (P1 to P5) is updated automatically, in accordance with the modifications of the application program (2, 3); and
f) executing the at least one modified application program in order to control the industrial plant.

2. Method according to the preceding claim, wherein the at least one graphical representation (101 to 103; 200) provided is linked with the at least one program point (P1-P5) of the at least one application program (2, 3) by means of the following method steps:
- executing the at least one application program (2, 3) step by step, wherein the at least one application program (2, 3) is at least partly executable, wherein each execution step preferably begins or ends at one of the multiple program points (P1 to P5);
- creating at least one graphical representation (101 to 103; 200) of at least one part of the industrial plant (1) directly before, during or after the execution of an execution step;
- linking the graphical representation (101 to 103; 200) created with the corresponding program point (P1 to P5) of the application program.

3. Method according to either of the preceding claims, wherein at least one region (251 to 253; 256) of one of the at least one graphical representations (101 to 103; 200) is allocated a link with the corresponding program point (P1 to P5) of the application program (2, 3), which region can be selected in order to follow the link.

4. Method according to any of the preceding claims, wherein allocating a link to a region (251 to 253; 256) of one of the at least one graphical representations (101 to 103; 200) is carried out by manual selection of the region, and wherein the manual selection is preferably carried out by means of a drag-and-drop operation of a selectable button.

5. Method according to any of the preceding claims, wherein allocating a link to a region (251 to 253; 256) of one of the at least one graphical representations (101 to 103; 200) is carried out automatically, wherein
during the capture of the at least one graphical representation (101 to 103; 200), image marks (241, 242, 243) are concomitantly captured, and wherein
the image marks (241, 242, 243) are fixedly assigned to a coordinate system of the industrial plant (1), such that the captured graphical representation (101 to 103; 200) can be brought to congruence with the coordinate system of the industrial plant (1).

6. Method according to any of Claims 1 to 3, wherein the at least one graphical representation (101 to 103; 200) is a moving graphical representation of the industrial plant (1), wherein the moving graphical representation comprises a time axis, and wherein the moving graphical representation (101 to 103; 200) is linked with at least one program point (P1 to P5) of the at least one application program (2, 3) via a point in time on the time axis.

7. Method according to any of the preceding claims, wherein at least two graphical representations (101 to 103; 200) are provided, and wherein the at least two graphical representations (101 to 103; 200) are displayed in a list, which is preferably scrollable.

8. Method according to any of the preceding claims, wherein the at least one application program (2, 3) stops if a stop is forced manually and/or if a safety device of the industrial plant (1) issues a stop command.

9. Method according to any of Claims 4-8, wherein the allocated region (251 to 253) is updated automatically, in accordance with the modifications of the at least one application program (2, 3).

10. Method according to any of the preceding claims, wherein the at least one graphical representation (101 to 103; 200) is displayed on a control device of the industrial plant, wherein the control device is preferably a handheld control device, such as a tablet computer or a smartphone.

11. Computer program for modifying application programs (2, 3) of an industrial plant (1), comprising:
at least one interface to at least one application program (2, 3) of an industrial plant (1), wherein the at least one application program (2, 3) has multiple program points (P1 to P5);
at least one graphical representation (101 to 103; 200), wherein the at least one graphical representation (101 to 103; 200) is a photograph of the industrial plant (1), wherein the at least one graphical representation (101 to 103; 200) shows at least one system state of the industrial plant (1), wherein the system state corresponds to one of the multiple program points (P1 to P5) and each of the graphical representations (101 to 103) is linked with at least one of the multiple program points (P1 to P5) of the at least one application program (2, 3);
wherein the computer program comprises instructions which, when they are executed by a computer device or a computer system comprising a memory and a processor, cause the computer device or the computer system to carry out a method according to Claims 1 to 10.

12. Computer device or computer system comprising a memory and a processor, configured for executing the computer program according to Claim 11.

## Revendications

1. Procédé mis en œuvre par ordinateur pour modifier des programmes d'application (2, 3) d'une installation industrielle (1), comprenant les étapes suivantes :
a) fourniture d'au moins un programme d'application (2, 3) sur une installation industrielle (1), l'au moins un programme d'application (2, 3) possédant plusieurs positions de programme (P1 à P5) ;
b) fourniture d'au moins une représentation graphique (101 à 103 ; 200), l'au moins une représentation graphique (101 à 103 ; 200) étant une photo de l'installation industrielle (1), l'au moins une représentation graphique (101 à 103 ; 200) montrant au moins un état de système de l'installation industrielle (1), l'état de système correspondant à l'une des plusieurs positions de programme (P1 à P5) et chacune des représentations graphiques (101 à 103) étant liée à au moins l'une des plusieurs positions de programme (P1 à P5) de l'au moins un programme d'application (2, 3) ;
c) exécution de l'au moins un programme d'application (2, 3) et, dans le cas où l'au moins un programme d'application s'arrête, exécution des étapes suivantes du procédé :
d1) affichage de l'au moins une représentation graphique afin de comparer l'état de système actuel de l'installation industrielle avec l'au moins une représentation graphique,
d2) réception d'une saisie d'utilisateur destinée à sélectionner une représentation graphique ou un lien entre une représentation graphique et l'une des plusieurs positions de programme (P1 à P5) et
e) recherche de l'une des plusieurs positions de programme (P1 à P5) avec laquelle la représentation graphique (101 à 103) sélectionnée est liée en utilisant le lien entre l'au moins une représentation graphique (101 à 103) et celle des plusieurs positions de programme (P1 à P5)
la recherche de la position de programme (P1 à P5) rendant possible une modification de l'au moins un programme d'application (2, 3) en affichant un éditeur à un opérateur,
l'éditeur comportant de préférence un modèle graphique de l'au moins un programme d'application (2, 3) et
des modifications dans l'au moins un programme d'application (2, 3) pouvant être effectuées au moyen de l'éditeur,
le lien de l'au moins une représentation graphique (101 à 103 ; 200) avec la position correspondante des plusieurs positions de programme (P1 à P5) étant actualisé conformément aux modifications du programme d'application (2, 3) ; et
f) exécution de l'au moins un programme d'application modifié en vue de commander l'installation industrielle.

2. Procédé selon la revendication précédente, l'au moins une représentation graphique (101 à 103 ; 200) fournie étant liée à l'au moins une position de programme (P1 à P5) de l'au moins un programme d'application (2, 3) par les étapes suivantes du procédé :
- exécution étape par étape de l'au moins un programme d'application (2, 3), l'au moins un programme d'application (2, 3) étant au moins apte à être exécuté partiellement, chaque étape d'exécution commençant ou se terminant de préférence à l'une des plusieurs positions de programme (P1 à P5) ;
- création d'au moins une représentation graphique (101 à 103 ; 200) d'au moins une partie de l'installation industrielle (1) directement avant, pendant ou après l'exécution d'une étape d'exécution ;
- lien de la représentation graphique (101 à 103 ; 200) créée avec la position de programme (P1 à P5) correspondante du programme d'application.

3. Procédé selon l'une des revendications précédentes, un lien avec la position de programme (P1 à P5) correspondante du programme d'application (2, 3) étant affecté au moins à une zone (251 à 253 ; 256) de l'une de l'au moins une représentation graphique (101 à 103 ; 200), laquelle zone peut être sélectionnée pour suivre le lien.

4. Procédé selon l'une des revendications précédentes, l'affectation d'un lien à une zone (251 à 253 ; 256) de l'une de l'au moins une représentation graphique (101 à 103 ; 200) s'effectuant par sélection manuelle de la zone, et la sélection manuelle s'effectuant de préférence au moyen d'une opération de glisser-déposer d'un bouton pouvant être sélectionné.

5. Procédé selon l'une des revendications précédentes, l'affectation d'un lien à une zone (251 à 253 ; 256) de l'une de l'au moins une représentation graphique (101 à 103 ; 200) s'effectuant automatiquement, des repères d'image (241, 242, 243) étant acquis conjointement lors de l'acquisition de l'au moins une représentation graphique (101 à 103 ; 200) et les repères d'image (241, 242, 243) étant associés à demeure à un système de coordonnées de l'installation industrielle (1), de sorte que la représentation graphique (101 à 103 ; 200) acquise peut être mise en coïncidence avec le système de coordonnées de l'installation industrielle (1).

6. Procédé selon l'une des revendications 1 à 3, l'au moins une représentation graphique (101 à 103 ; 200) étant une représentation graphique mobile de l'installation industrielle (1), la représentation graphique mobile comportant un axe de temps, et la représentation graphique (101 à 103 ; 200) mobile étant liée à au moins une position de programme (P1 à P5) de l'au moins un programme d'application (2, 3) par le biais d'un instant sur l'axe de temps.

7. Procédé selon l'une des revendications précédentes, au moins deux représentations graphiques (101 à 103 ; 200) étant fournies, et les au moins deux représentations graphiques (101 à 103 ; 200) étant affichées dans une liste qui est de préférence défilante.

8. Procédé selon l'une des revendications précédentes, l'au moins un programme d'application (2, 3) s'arrêtant dans le cas où un arrêt est forcé manuellement et/ou dans le cas où un dispositif de sécurité de l'installation industrielle émet une instruction d'arrêt.

9. Procédé selon l'une des revendications 4 à 8, la zone (251 à 253) affectée étant actualisée automatiquement conformément aux modifications de l'au moins un programme d'application (2, 3).

10. Procédé selon l'une des revendications précédentes, l'au moins une représentation graphique (101 à 103 ; 200) étant affichée sur un dispositif de commande de l'installation industrielle, le dispositif de commande étant de préférence un dispositif de commande tenu en main, tel qu'une tablette électronique ou un Smartphone.

11. Programme informatique destiné à modifier des programmes d'application (2, 3) d'une installation industrielle (1), comprenant :
au moins une interface vers au moins un programme d'application (2, 3) d'une installation industrielle (1), l'au moins un programme d'application (2, 3) possédant plusieurs positions de programme (P1 à P5) ;
au moins une représentation graphique (101 à 103 ; 200), l'au moins une représentation graphique (101 à 103 ; 200) étant une photo de l'installation industrielle (1), l'au moins une représentation graphique (101 à 103 ; 200) montrant au moins un état de système de l'installation industrielle (1), l'état de système correspondant à l'une des plusieurs positions de programme (P1 à P5) et chacune des représentations graphiques (101 à 103) étant liée à au moins l'une des plusieurs positions de programme (P1 à P5) de l'au moins un programme d'application (2, 3) ; le programme informatique possédant des instructions qui, lorsqu'elles sont exécutées sur un arrangement informatique ou un système informatique comprenant une mémoire et un processeur, amènent l'arrangement informatique ou le système informatique à mettre en œuvre un procédé selon l'une des revendications 1 à 10.

12. Arrangement informatique ou système informatique comprenant une mémoire et un processeur, conçu pour exécuter le programme informatique selon la revendication 11.
